# EUROPEAN PATENT SPECIFICATION

(11) **EP 0 368 642 B1**
(45) Date of publication and mention of the grant of the patent: **07.07.1993**
(21) Application number: 89311567.5
(22) Date of filing: 08.11.1989
(51) Int. Cl.: B23K 20/12

(54) **Method of forming a joint between a Ti-Al alloy member and a steel structural member**
Verfahren zur Ausbildung zwischen einem Teil aus einer Titan-Aluminium-Legierung und einem Stahlbauteil
Méthode pour la formation d'une jonction entre une pièce d'un alliage titane-aluminium et d'un profilé en acier

(30) Priority: 11.11.1988 JP 285279/88
(43) Date of publication of application: 16.05.1990
(73) Proprietor: DAIDO TOKUSHUKO KABUSHIKI KAISHA, Naka-ku Nagoya-shi Aichi-ken (JP); FUJI OOZX INC., Fujisawa-shi, Kanagawa-ken (JP)
(72) Inventor: Isobe, Susumu, Nagoya-shi, Aichi-ken (JP); Noda, Toshiharu, Tajimi-shi, Gifu-ken (JP); Hirayama, Hiroshi, Kanagawa-ken (JP)
(74) Representative: Watkins, Arnold Jack

(56) References cited:
- EP-A- 0 275 391
- GB-A- 2 091 153
- US-A- 4 073 474
- WELDING JOURNAL vol.67 no. 11, November 1988, pages 264s-270s, Miami, FL, US ; F: SASSANI et al: "Friction Welding of Incompatible Materials"
- PATENT ABSTRACTS OF JAPAN vol. 10, no. 381 (M-547)(2438), 10 December 1986 & JP-A-61 172692 (ASAHI)

## Description

The present invention relates to a method of forming a joint between a Ti-Al alloy member which consists mainly of the intermetallic compound TiAl and a structural member made of steel to produce a machine structural part. The invention also relates to jointed machine parts produced by this method.

It is becoming more popular to use Ti-Al alloys which are heat resistant (durable at a temperature of 700°C or higher) and light weight (specific gravity 3.8) as the material for machine parts which move rotationally or reciprocally at a high speed, such as turbine blades and engine valves or wheels of turbo-chargers.

The present inventors have previously conducted research with coworkers on materials suitable for the above use and developed various Ti-Al alloys. For example, the alloy which consists essentially of 32 - 38 % of Al and the balance of Ti and contains 0.005 - 0.20 % of B, and the alloy which essentially consists of the above quantities of Al and Ti and contains, in addition to the above quantity of B, up to 0.2% of C, up to 0.3 % of 0 and/or up to 0.3 % of N (provided that 0 + N add up to 0.4 %) are disclosed in Japanese Patent Document Sho 63-125634. These alloys have improved strength and toughness when compared with the conventional Ti-Al alloys.

Further examples are the alloy which consists essentially of 32 - 38 % of Al and the balance of Ti and contains 0.05 - 3.0 % of Ni and/or 0.05 - 3.0 % of Si, and the alloy according to this composition further containing the above quantity of B or a controlled amount of C, O and N (Japanese Patent Document Sho 62-336609). These alloys are of higher ductility and easy to cast.

In order to make it possible to use the Ti-Al alloy member under the conditions of a high temperature and high speed movement such as rotation, it is necessary to join the member to an axis of structural steel which can be surface hardened. The term "structural steel" means the steels to be used as the material for the structural member of machine parts. For example, in a hot wheel of a turbocharger, SCM-steel or SNCM steel is used for the axis of rotation, and in an engine valve, martensitic heat resistant steel is used for the stem. All the steels of this kind are included in the structural steels.

As a means for forming a joint between the Ti-Al alloy member and the structural steel member, shrink fitting has been tried, but usually, silver alloy brazing is used. However, because the temperature of the exhaust gas has become higher due to the increased output of engines, brazing is becoming less reliable, i.e. there are problems with the strength of the brazed parts during use.

On the other hand, Ni-based superalloy is also used as a material for the hot wheels, and friction welding is used for connecting the wheel to the axis made of the structural steel. Friction welding gives a higher strength to the jointed part, in comparison with the welding method using a filler metal, which is 95 % or higher of the strength of the base metal, and therefore, it is a preferable welding method for manufacturing these kinds of machine parts.

Even if it is attempted to use friction welding to joint a hot wheel made of a Ti-Al alloy and an axis made of a structural steel such as SCM 435, the jointing is not successful because cracking occurs after the welding is done. This is due to breakage of the jointed part because of martensitic transformation which has occurred in the material of the axis during cooling after the welding at a high temperature generated by the friction, resulting in volume expansion, and because of formation of brittle substances such as TiC at the jointed region.

The object of the present invention is to enable manufacture of desired machine parts by jointing the Ti-Al alloy member and the structural steel member such as an axis to give a joint which is durable at a higher temperature, and thus, to solve the above noted problems.

Thus, according to one aspect of the present invention there is provided a method of forming a joint between a Ti-Al alloy member which consists mainly of an intermetallic compound TiAl, and a steel structural member, characterized in that the joint is formed using an intermediate member comprising an austenitic stainless steel or a heat resistant steel, or a Ni-based or Co-based super alloy, between said members; said intermediate member being friction welded to said steel structural member.

According to a further aspect there is provided a jointed machine part comprising a Ti-Al alloy member which consists mainly of an intermetallic compound TiAl, and a steel structural member, characterized in that said Ti-Al alloy member and said steel structural member are connected via an intermediate member comprising an austenitic stainless steel or a heat resistant steel, or a Ni-based or Co-based super alloy, said intermediate member being friction welded to said steel structural member.

Throughout the specification, all percentages are by weight.

In the accompanying drawings, Fig. 1, Fig. 2 and Fig. 3 illustrate an example of a machine part manufactured by the present method of forming a joint. Fig. 1 and Fig. 2 show a hot wheel of a turbocharger, and Fig. 3 shows an engine valve; all the figures are side views in which half of the side view is in cross section.

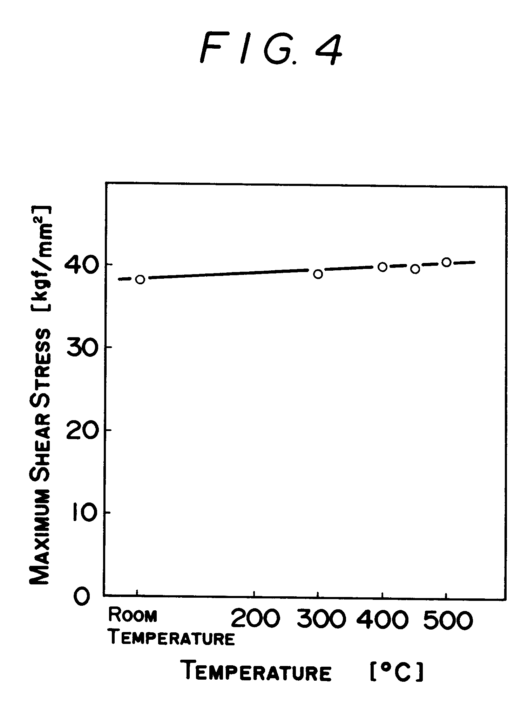

Fig. 4 is a graph showing the results of hot torsion testing of the jointed parts obtained by the present method.

Where an austenitic stainless steel member of a heat resistant steel member is used as the intermediate member, the intermediate member and the Ti-Al alloy member may be joined by friction welding.

If it is desired to realize an extremely good high temperature strength at the jointed part, a γ'-precipitation-hardened type Ni-based superalloy may be used as the material of the intermediate member. Friction welding is a useful way of forming a joint also in this case, but it is possible to form a joint, instead of the friction welding, by means of internal chilling or insert-casting to partly envelope the Ni-based intermediate member with the Ti-Al alloy member. This is because both this kind of Ni-based superalloy and the Ti-Al alloy have similar thermal expansion coefficients.

The present invention can be applied to all the Ti-Al alloys mentioned above, but, in view of the use of the machine parts which are used under a high temperature and high speed rotational or reciprocal movement, it is advisable to use, even if the alloy composition shifts from the intermetallic compound TiAl (Al:36 % - Ti:64 %), a Ti-rich composition, and an Al-Rich composition is not so useful.

Accordingly, preferred Ti-Al alloys to which the present invention may be applied are those having the following compositions:
1) a Ti-Al alloy containing 32 - 36 % Al and the balance substantially of Ti,
2) a Ti-Al alloy containing 32 - 36 % of Al, at least one component selected from the following groups:
   a) 0.005 - 0.20 % of B,
   b) Up to 0.2 % of C and up to 0.3 % of O and/or up to 0.3 % of N (provided that O + N is not higher than 0.4 %), and
   c) 0.05 - 3.0 % of Ni and/or 0.05 - 3.0 % of Si, and the balance of Ti.

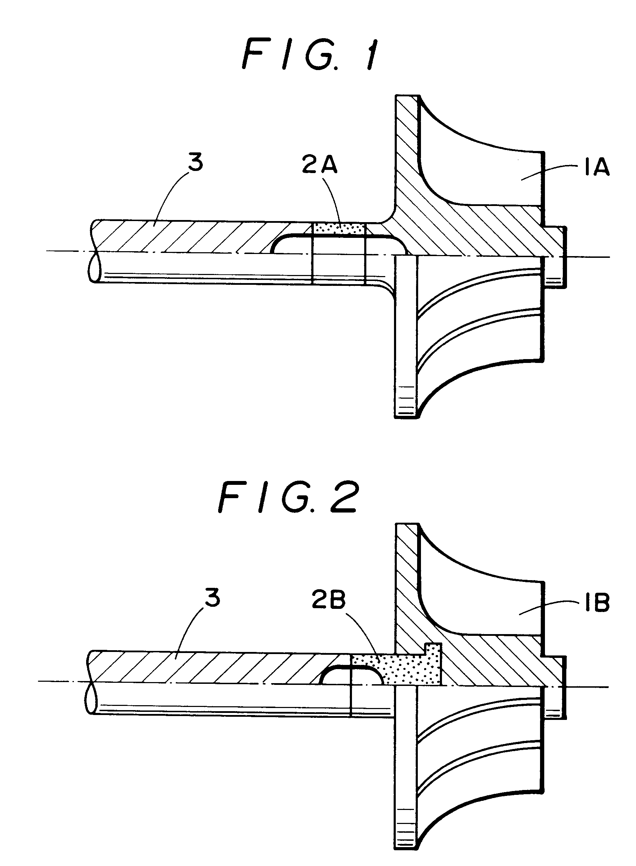

An example of the machine part, which is a hot wheel of a turbocharger is shown in Fig. 1. The hot wheel consists of a wheel 1A of the Ti-Al alloy, a ring of INCONEL 751 as the intermediate member 2A and a rod of SCM 435 steel as the axis 3, and is manufactured by forming joints between all the members by friction welding.

Fig. 2 shows a similar machine part, which is manufactured by incorporating a nut-shaped Ni-based super alloy member 2B as the intermediate member with the material of the wheel 1B when casting the latter, and forming a joint between the thus made intermediate member and the rod of axis 3 by friction welding.

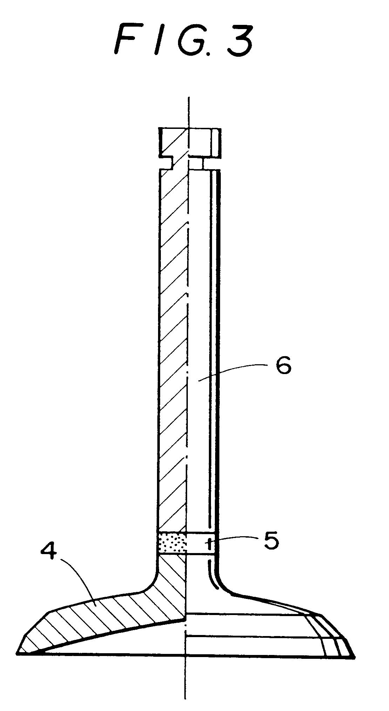

The machine part shown in Fig. 3 is an engine valve, which is manufactured by jointing all the members, a valve body 4 of the Ti-Al alloy, a disk 5 of INCONEL 751 as the intermediate member, and a stem 6 of SUH3 steel, by friction welding. In order to finish the above prepared blank to the valve, it is of course necessary to treat the stem by toughtride (soft nitriding) treatment so as to surface-harden, and apply build up welding of a hard metal such as Stelite to the part which contacts the valve seat.

According to the present method of jointing, it is possible to joint the Ti-Al alloy member which is light-weight and has good heat resistance to the structural steel member which is surface hardenable and has high strength, and to give high strength to the jointed part.

The improved high temperature strength of the jointed part enables application of high frequency hardening or flame hardening for surface hardening to the journal part or the seal ring groove neighboring to the jointed part.

Because the heat resistant alloys used in the present invention as the intermediate member generally have lower thermal conductivities, even if the Ti-Al alloy member is subjected to a high temperature, heat transfer from the member to the axis member is relatively small. This contributes to increase of durability of the machine part such as the journal.

Thus, the present invention is particularly useful when applied to manufacturing of machine parts such as hot wheels of turbochargers, engine valves, turbine blades and disks.

### EXAMPLE

The following three materials all in the form of a rod of diameter 8.5 mm were friction welded with a break-type welding machine to form a single rod. Welding was carried out first at the end faces of "A" and "B", and then, the end faces of "B" and "C":
A) Ti-Al alloy (Al 36 %, Hv 250)
B) INCONEL 751 (HRC 39) intermediate member
C) SNCM 439 steel (HRC 33) axis member

Flashes which occurred at the welded parts were removed by cutting with a lathe.

Hot torsion tests on the jointed parts confirmed that the strength is sufficient as shown in Fig. 4. Breakage occurred in the Ti-Al alloy member, one of the base metals.

## Claims

1. A method of forming a joint between a Ti-Al alloy member which consists mainly of an intermetallic compound TiAl, and a steel structural member, characterized in that the joint is formed using an intermediate member comprising an austenitic stainless steel or a heat resistant steel, or a Ni-based or Co-based super alloy, between said members; said intermediate member being friction welded to said steel structural member.

2. A method as claimed in claim 1, wherein said intermediate member is made of an austenitic stainless steel or a heat resistant steel, and said intermediate member is friction welded to said Ti-Al alloy member.

3. A method as claimed in claim 1, wherein said intermediate member is made of Ni-based alloy of γ'-precipitation hardened type, and said intermediate member is connected to said Ti-Al alloy member by insert-casting.

4. A jointed machine part comprising a Ti-Al alloy member which consists mainly of an intermetallic compound TiAl, and a steel structural member, characterized in that said Ti-Al alloy member and said steel structural member are connected via an intermediate member comprising an austenitic stainless steel or a heat resistant steel, or a Ni-based or Co-based super alloy, said intermediate member being friction welded to said steel structural member.

5. A jointed machine part as claimed in claim 4, wherein said Ti-Al alloy member consists of 32 - 36 % of Al and the balance of Ti.

6. A jointed machine part as claimed in claim 4, wherein said Ti-Al alloy member consists of 32 - 36 % of Al, at least one component selected from the following groups:
a) 0.005 - 0.20 % of B;
b) up to 0.2 % of Carbon, and up to 0.3 % of Oxygen and/or up to 0.3 % of Nitrogen (provided that O + N is up to 0.4 %);
c) 0.05 - 3.0 % of Ni and/or 0.05 - 3.0 % of Si,
and the balance of Ti.

7. A jointed machine part as claimed in any one of claims 4 to 6 wherein said steel structural member is a martensitic heat resistant steel member and said intermediate member is a Ni-based super alloy member.

8. An engine valve comprising a jointed machine part as claimed in any one of claims 4 to 7.

## Patentansprüche

1. Verfahren zum Ausbilden eines Verbundes zwischen einem Ti-Al-Legierungsteil, das hauptsächlich aus einer intermetallischen TiAl-Verbindung besteht, und einem Stahlbauteil,
**dadurch gekennzeichnet,**
daß der Verbund unter Verwendung eines Zwischenteils, das einen austenitischen rostfreien Stahl oder einen wärmebeständigen Stahl umfaßt, oder eine Superlegierung auf Ni-Basis oder Co-Basis, zwischen diesen Teilen ausgebildet wird, wobei das Zwischenteil mittels Reibungsschweißung an das Stahlbauteil angeschweißt wird.

2. Verfahren nach Anspruch 1, wobei das Zwischenteil aus einem austenitischen rostfreien Stahl oder einem wärmebeständigen Stahl besteht und dieses Zwischenteil durch Reibungsschweißung an das TiAl-Legierungsteil angeschweißt wird.

3. Verfahren nach Anspruch 1, wobei das Zwischenteil aus einer Legierung auf Ni-Basis vom γ-ausscheidungsgehärteten Typ besteht und das Zwischenteil mit dem TiAl-Legierungsteil durch Einsatzgießen verbunden ist.

4. Verbundenes Maschinenteil mit einem Ti-Al-Legierungsteil, das hauptsächlich aus einer intermetallischen TiAl-Verbindung besteht, und einem Stahlbauteil,
dadurch gekennzeichnet,
daß das Ti-Al-Legierungsteil und das Stahlbauteil über ein Zwischenteil verbunden sind, das austenitischen rostfreien Stahl oder einen wärmebeständigen Stahl oder eine Superlegierung auf Ni-Basis oder Co-Basis umfaßt, wobei das Zwischenteil durch Reibungsschweißung an das Stahlbauteil angeschweißt ist.

5. Verbundenes Maschinenteil nach Anspruch 4, wobei das Ti-Al-Legierungsteil aus 32 - 36 % Al und Rest Ti besteht.

6. Verbundenes Maschinenteil nach Anspruch 4, wobei das Ti-Al-Legierungsteil aus 32 - 36 % Al und wenigstens einem Bestandteil besteht, der aus den folgenden Gruppen ausgewählt ist:
a) 0,005 - 0,20 % B,
b) bis zu 0,2 % Kohlenstoff und bis zu 0,03 % Sauerstoff und/oder bis zu 0,3 % Stickstoff (vorausgesetzt daß O + N bis 0,4 % beträgt),
c) 0,05 - 3,0 % Ni und/oder 0,05 - 3,0 % Si und der Rest Ti.

7. Verbundenes Maschinenteil nach einem der Ansprüche 4 bis 6, wobei das Stahlbauteil ein martensitisches wärmebeständiges Stahlteil und das Zwischenteil ein Superlegierungsteil auf Ni-Basis ist.

8. Maschinenventil mit einem verbundenen Maschinenteil nach einem der Ansprüche 4 bis 7.

## Revendications

1. Procédé pour former une jonction entre un élément en alliage Ti-Al, qui comprend essentiellement un compose intermétallique TiAl, et un élément structurel en acier, caractérisé en ce que la jonction est réalisée à l'aide d'un élément intermédiaire à base d'un acier inoxydable austénitique ou d'un acier resistant à la chaleur, ou d'un superalliage au nickel ou au cobalt, placé entre lesdits éléments; ledit élément intermédiaire étant soudé par friction audit élément structurel en acier.

2. Procédé selon la revendication 1, dans lequel ledit élément intermédiaire est à base d'un acier inoxydable austénitique ou d'un acier résistant à la chaleur, et ledit élément intermédiaire est soudé par friction audit élément en alliage Ti-Al.

3. Procédé selon la revendication 1, dans lequel ledit élément intermédiaire est à base d'alliage au nickel du type γ' durci par précipitation, et ledit élément intermédiaire est lié par insertion coulée audit élément en alliage Ti-Al.

4. Pièce assemblée de machine, comprenant un élément en alliage Ti-Al à base essentiellement d'un composé intermétallique TiAl, et un élément structurel en acier, caractérisé en ce que ledit élément en alliage Ti-Al et ledit élément structurel en acier sont reliés par un élément intermédiaire à base d'un acier inoxydable austénitique ou d'un acier résistant à la chaleur, ou d'un superalliage au nickel ou au cobalt, ledit élément intermédiaire étant soudé par friction audit élément structurel en acier.

5. Pièce assemblée de machine, selon la revendication 4, dans laquelle ledit élément en alliage Ti-Al comprend de 32 à 36 % d'Al, le reste étant du Ti.

6. Pièce assemblée de machine, selon la revendication 4, dans laquelle ledit élément en alliage Ti-Al comprend de 32 à 36 % d'Al, au moins un composé choisi parmi :
a) 0,005 à 0,20 % de B,
b) jusqu'à 0,2 % de carbone et jusqu'à 0,03 % d'oxygène et/ou jusqu'à 0,3 % d'azote (sous réserve que O + N soit inférieur ou égal à 0,4 %),
c) 0,05 à 3,0 % de Ni et/ou 0,05 à 3,0 % de Si,
le reste étant Ti.

7. Pièce assemblée de machine, selon l'une quelconque des revendications 4 à 6, dans laquelle ledit élément structurel est un élément en acier martensitique résistant à la chaleur et ledit élément intermédiaire est un élément en superalliage au nickel.

8. Soupape de moteur comprenant une pièce assemblée de machine selon l'une quelconque des revendications 4 à 7.
